# DEMANDE DE BREVET EUROPEEN

(11) **EP 3 502 501 A1**
(43) Date de publication de la demande: **26.06.2019**
(21) Numéro de dépôt: 18213745.5
(22) Date de dépôt: 18.12.2018
(51) Int. Cl.: F16C 35/063, F16C 35/073, F16C 41/00, G01M 13/04, G01B 11/08, G01B 11/16, F16C 35/067, G01B 11/14

(54) **PROCÉDÉ DE MONTAGE D'UN PALIER À ROULEMENT DANS UN MÉCANISME FONCTIONNEL**

(30) Priorité: 19.12.2017 FR 1762555
(71) Demandeur: NTN-SNR Roulements, 74000 Annecy (FR)
(72) Inventeur: BRISSON, Sébastien, 74130 Contamine sur Arve (FR); RAMBAUD, Laurent, 74600 Quintal (FR); ROUX, Martial, 74370 Villaz (FR)
(74) Mandataire: Sayettat, Julien Christian

(57) **Abrégé**

L'invention concerne un procédé de montage d'un palier à roulement dans un mécanisme fonctionnel, ledit palier comprenant un ensemble intérieur et un ensemble extérieur formant entre eux un espace de roulement dans lequel est disposé un ensemble de roulement pour permettre la rotation relative desdits ensembles extérieur et intérieur, ledit procédé prévoyant une déformation du palier lors de son montage dans le mécanisme pour ajuster un jeu fonctionnel entre l'ensemble de roulement et les ensembles intérieur et extérieur, ledit procédé prévoyant :
- d'équiper au moins un ensemble avec un dispositif (14) apte à changer d'état optique en fonction de la déformation du palier, ledit dispositif étant fixé audit ensemble ;
- de contrôler le jeu fonctionnel par observation de l'état optique dudit dispositif.

## Description

L'invention concerne un procédé de montage d'un palier à roulement dans un mécanisme fonctionnel.

De façon conventionnelle, le palier comprend un ensemble intérieur incluant au moins un organe intérieur et un ensemble extérieur incluant au moins un organe extérieur, lesdits organes formant entre eux un espace de roulement dans lequel est disposé un ensemble de roulement, incluant au moins une rangée de corps roulants, pour permettre la rotation relative desdits organes extérieur et intérieur.

Selon une application particulière, l'invention concerne le montage des paliers à roulement de type à rotule sur rouleaux dans lesquels l'organe intérieur présente deux pistes de roulement sur chacune desquelles une rangée de rouleaux est disposée, l'organe extérieur présentant une piste de roulement sphérique dans laquelle les deux rangées de rouleaux sont disposées afin de permettre un rotulage angulaire desdits organes.

Pour assurer le bon fonctionnement du palier, notamment relativement à sa durée de vie, le procédé prévoit une déformation dudit palier lors de son montage dans le mécanisme pour ajuster un jeu fonctionnel entre l'ensemble de roulement et les ensembles intérieur et extérieur.

En particulier, l'invention s'applique au montage d'un palier dont l'organe intérieur présente un alésage qui est emmanché sur un cône du mécanisme fonctionnel, notamment afin de guider en rotation un arbre solidaire dudit cône. Le cône est agencé pour, en fonction de la distance d'emmanchement, ajuster un jeu fonctionnel du fait de la dilatation de l'alésage par ledit cône.

Pour obtenir le jeu fonctionnel nécessaire à un fonctionnement optimal du palier, ledit jeu peut être contrôlé au moyen de cales d'épaisseur variable, l'épaisseur maximale de la cale pouvant être interposée entre l'ensemble de roulement et l'ensemble extérieur donnant une image dudit jeu.

Toutefois, la fiabilité de ce contrôle reste insuffisante pour garantir avec précision le jeu fonctionnel optimal, et ce d'autant plus lors du montage des paliers à roulement de type à rotule sur rouleaux, puisque leur rotulage en dépend directement.

Pour tenter de résoudre ce problème, le document EP-1 508 709 propose l'utilisation d'une jauge de contrainte dont la précision se fait toutefois au détriment de la simplicité de mise en oeuvre. En particulier, la jauge de contrainte est fixée à un ensemble du palier à roulement mais nécessite un lecteur externe pour pouvoir être exploitée.

L'invention vise à perfectionner l'art antérieur en proposant notamment un procédé de montage d'un palier à roulement dans lequel le jeu fonctionnel peut être contrôlé de façon particulièrement simple et fiable, et ce notamment en relation avec le montage d'un palier à rotule sur rouleaux sur un cône.

A cet effet, l'invention propose un procédé de montage d'un palier à roulement dans un mécanisme fonctionnel, ledit palier comprenant un ensemble intérieur et un ensemble extérieur formant entre eux un espace de roulement dans lequel est disposé un ensemble de roulement pour permettre la rotation relative desdits ensembles extérieur et intérieur, ledit procédé prévoyant une déformation du palier lors de son montage dans le mécanisme pour ajuster un jeu fonctionnel entre l'ensemble de roulement et les ensembles intérieur et extérieur, ledit procédé prévoyant :
- d'équiper au moins un ensemble avec un dispositif apte à changer d'état optique en fonction de la déformation du palier, ledit dispositif étant fixé audit ensemble ;
- de contrôler le jeu fonctionnel par observation de l'état optique dudit dispositif.

D'autres objets et avantages de l'invention apparaîtront dans la description qui suit, faite en référence aux figures jointes, dans lesquelles :
- les figures 1 et 2 sont des demi-coupes axiales montrant un palier à roulement monté selon respectivement un mode de réalisation de l'invention ;
- les figures 3a et 3b représentent schématiquement un dispositif de contrôle équipant le palier à roulement de la figure 1, selon respectivement un mode de réalisation de l'invention ;
- les figures 4a et 4b représentent schématiquement un dispositif de contrôle équipant le palier à roulement de la figure 2, selon respectivement un mode de réalisation de l'invention.

En relation avec ces figures, on décrit ci-dessous un procédé de montage d'un palier à roulement dans un mécanisme fonctionnel, notamment permettant le guidage en rotation d'un arbre tournant 1.

Le palier comprend un ensemble intérieur et un ensemble extérieur formant entre eux un espace de roulement dans lequel est disposé un ensemble de roulement pour permettre la rotation relative desdits ensembles extérieur et intérieur.

Dans la description, les termes « extérieur » et « intérieur » sont définis par rapport à l'axe de rotation de l'ensemble tournant, respectivement pour une localisation éloignée et proche dudit axe. Les termes « axial » et « radial » sont également définis par rapport à cet axe, respectivement pour une direction suivant cet axe et s'éloignant ou se rapprochant de lui.

Dans les modes de réalisation représentés, les ensembles extérieur et intérieur comprennent respectivement un organe extérieur 2 et un organe intérieur 3 pourvus chacun d'au moins une piste annulaire 2a, 3a, 3b de roulement formant entre lesdits organes un espace de roulement dans lequel est disposée au moins une rangée 4a, 4b de corps roulants 4 pour permettre la rotation relative desdits organes. L'ensemble de roulement comprend en outre au moins une cage 5a, 5b disposée dans l'espace de roulement.

Plus précisément, la description est faite en relation avec un palier à roulement de type à rotule sur rouleaux, dans lequel l'ensemble de roulement comprend deux rangées 4a, 4b de rouleaux 4 qui sont retenues par respectivement une cage 5a, 5b en étant espacées axialement dans l'espace de roulement, l'organe intérieur 3 présentant deux pistes 3a, 3b de roulement sur chacune desquelles une rangée 4a, 4b de rouleaux 4 est disposée, l'organe extérieur 2 présentant une piste 2a de roulement sphérique dans laquelle les deux rangées 4a, 4b de rouleaux 4 sont disposées afin de permettre un rotulage angulaire desdits organes.

Un tel palier à roulement permet un rotulage angulaire des ensembles en autorisant leur rotation relative sous désalignement, c'est-à-dire lorsque les axes respectifs de chacun des organes 2, 3 forment un angle entre eux. Ainsi, ce type de palier est particulièrement adapté au guidage en rotation d'un arbre 1 tournant par rapport à une structure fixe, dans lequel l'axe de rotation dudit arbre peut fluctuer.

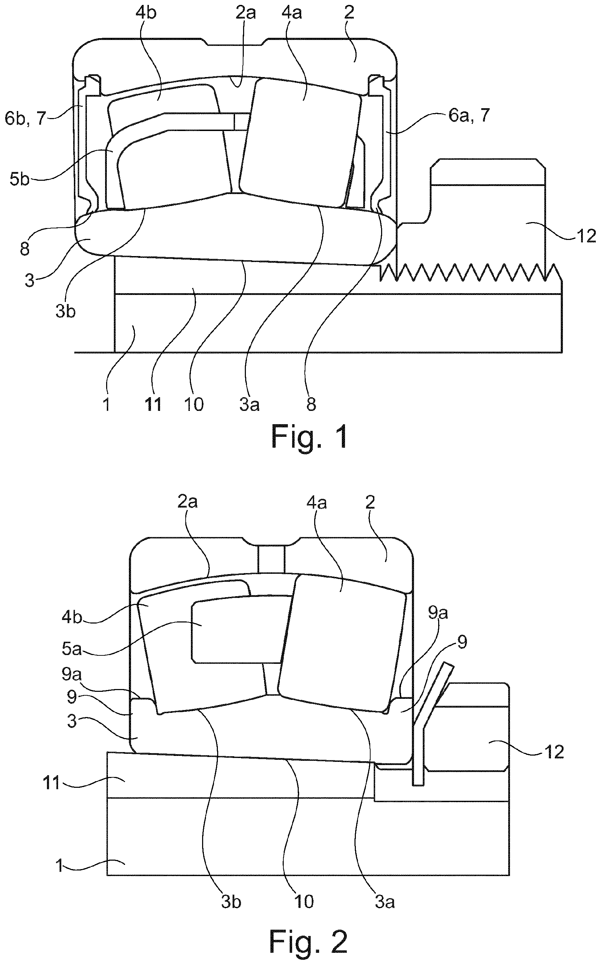

La figure 1 représente une réalisation dans laquelle l'ensemble extérieur comprend un dispositif d'étanchéité 6a, 6b pour chacun des côtés de l'espace de roulement. En particulier, le dispositif d'étanchéité 6a, 6b comprend une armature rigide 7 qui est solidaire de l'organe extérieur 2, ladite armature étant équipée d'un élément élastomère présentant au moins une lèvre 8 en contact frottant sur une portée de l'organe intérieur 3.

La figure 2 représente une réalisation dans laquelle chacune des pistes de roulement 3a, 3b de l'organe intérieur 3 est équipée d'un collet 9 de retenue des rouleaux 4, ledit collet présentant notamment une portée périphérique extérieure 9a.

Pour assurer le bon fonctionnement du palier, notamment relativement à sa durée de vie, le procédé prévoit une déformation dudit palier lors de son montage dans le mécanisme pour ajuster un jeu fonctionnel entre l'ensemble de roulement et les ensembles intérieur et extérieur. En particulier, le jeu fonctionnel peut être positif, ou négatif pour appliquer une précharge de l'ensemble de roulement entre les ensembles intérieur et extérieur.

Selon une réalisation, l'organe intérieur 3 peut être dilaté lors du montage du palier dans le mécanisme. Selon une autre réalisation, éventuellement complémentaire, l'organe extérieur 2 peut être compressé lors du montage du palier dans le mécanisme.

L'organe intérieur 3 présente un alésage 10 qui est emmanché sur un cône 11 du mécanisme fonctionnel pour, en fonction de la distance d'emmanchement, ajuster un jeu fonctionnel du fait de la dilatation dudit alésage par ledit cône.

En relation avec les figures 1 et 2, le cône 11 est solidaire de l'arbre 1 du mécanisme fonctionnel, un écrou 12 étant monté sur ledit cône pour pousser l'organe intérieur 3 le long dudit cône sur une distance d'emmanchement. Ainsi, la dilatation de l'organe intérieur 3 ajuste le jeu fonctionnel entre les rouleaux 4 et les pistes de roulement 2a, 3a, 3b, pouvant aller jusqu'à appliquer une précharge desdits rouleaux entre lesdites pistes. En variante, l'arbre 1 peut présenter une portion conique sur laquelle l'alésage 10 est emmanché.

Le procédé de montage prévoit de contrôler le jeu fonctionnel par observation de l'état optique d'un dispositif apte à changer d'état optique en fonction de la déformation du palier, ledit dispositif équipant au moins un ensemble, notamment au moins un composant d'au moins l'ensemble extérieur, l'ensemble intérieur et l'ensemble de roulement, en étant fixé à lui.

En particulier, dans les modes de réalisation représentés, l'état optique du dispositif de contrôle est fonction de la dilatation de l'organe intérieur 3, le procédé prévoyant d'ajuster la distance d'emmanchement jusqu'à contrôler le jeu fonctionnel souhaité. De façon avantageuse, le dispositif de contrôle est fixé à l'organe intérieur 3 ou à un composant de l'ensemble intérieur qui est solidaire en dilatation dudit organe. En variante, le dispositif de contrôle peut être disposé sur un composant de l'ensemble de roulement, par exemple une cage 5a, 5b, et/ou sur un composant de l'ensemble extérieur, par exemple sur l'organe extérieur 2.

Ainsi, grâce à ce contrôle simple et fiable, le procédé permet d'obtenir le jeu fonctionnel nécessaire à un fonctionnement optimal du palier dans le mécanisme fonctionnel, notamment relativement à sa durée de vie. En particulier, le contrôle du jeu fonctionnel peut être réalisé directement par observation visuelle et/ou par un système vidéo ou d'analyse spectrale de l'état optique du dispositif.

Selon une réalisation avantageuse, le procédé prévoit un contrôle itératif du jeu fonctionnel lors du montage du palier dans le mécanisme, la déformation du palier étant stoppée après contrôle d'un jeu fonctionnel seuil, notamment en stoppant le serrage de l'écrou 12 dans les modes de réalisation représentés.

Pour ce faire, le dispositif de contrôle peut être apte à changer d'état optique en fonction d'au moins une valeur seuil de déformation du palier, par exemple qui correspond à un jeu fonctionnel souhaité. En outre, plusieurs dispositifs de contrôle qui sont aptes à changer d'état optique en fonction de respectivement une valeur seuil de déformation du palier peuvent être utilisés, le procédé prévoyant de pouvoir contrôler le jeu fonctionnel induit par chacune desdites déformations seuils.

Selon une réalisation, le dispositif de contrôle est solidaire d'une portée d'un ensemble qui subit la déformation du palier, ladite portée pouvant être disposée d'un côté du palier, par exemple du côté où la contrainte de déformation est appliquée, ou de l'autre en fonction de la visibilité de ladite portée dans l'application considérée.

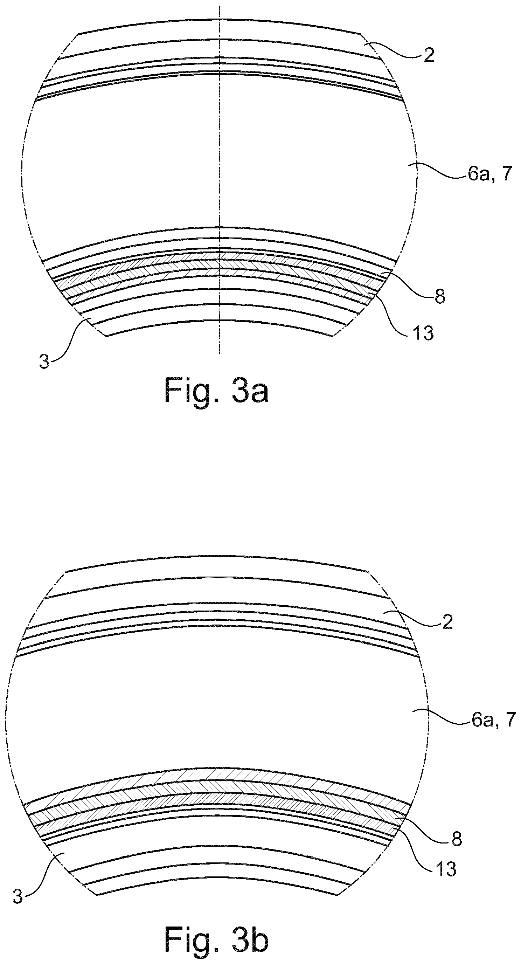

Selon les réalisations des figures 3a et 3b, un dispositif de contrôle comprend un témoin 13 qui est fixé sur une portée d'un ensemble, ledit témoin étant réalisé à base d'un matériau qui est apte à changer de spectre optique en fonction de sa déformation. Le matériau utilisé peut être de type mécano-chromatique, par exemple en étant à base de poly-2-vinyl-pyridine, déposé en couche mince sur la portée, notamment en trois bandes concentriques pouvant changer de couleurs spécifiquement en fonction de leur déformation.

La figure 3a représente un témoin 13 fixé sur une portée de l'organe intérieur 3 et la figure 3b un témoin 13 fixé sur une portée de la lèvre 8 du dispositif d'étanchéité 6a. Dans les deux cas, la dilatation de l'organe intérieur 3 induit celle de la portée et donc la possibilité de changement de spectre optique, notamment de couleur, du témoin 13.

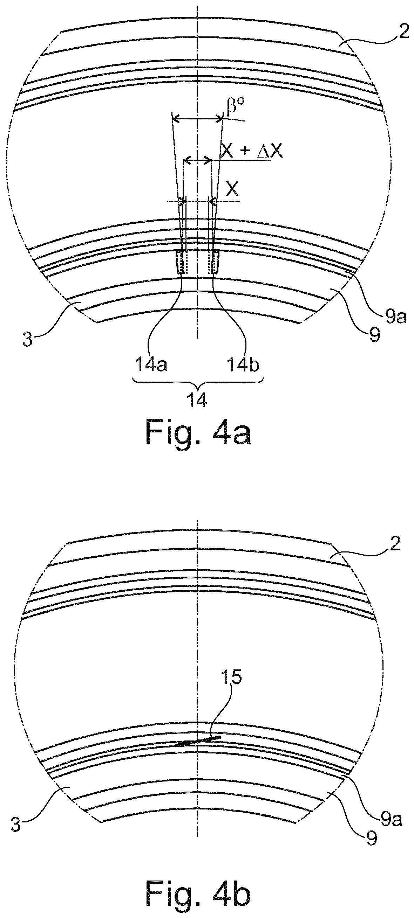

La figure 4a représente un dispositif de contrôle comprenant un motif géométrique 14 qui est réalisé sur une portée d'un ensemble, ledit motif étant agencé pour changer de géométrie en fonction de la déformation de ladite portée. Plus précisément, deux barrettes 14a, 14b sensiblement radiales et espacées angulairement d'un pas X peuvent être réalisées, par exemple par gravure, sur une portée de l'organe intérieur 3, notamment sur le collet 9, l'espacement X et/ou l'inclinaison β relatifs desdites barrettes dépendant directement de la dilatation de ladite portée.

De façon avantageuse, le contrôle du jeu fonctionnel peut être réalisé par comparaison du motif géométrique 14 avec un étalon dudit motif, par exemple au moyen d'une loupe gravée avec ledit étalon. La figure 4a représente les barrettes 14a, 14b en position nominale (trait pointillé) et en état contraint (trait plein).

Selon une réalisation, un dispositif de contrôle comprend un témoin 15 qui est fixé sur une portée d'un ensemble, ladite fixation et/ou ledit témoin étant agencé pour se dégrader visuellement en fonction de la déformation de ladite portée, le contrôle de la préchage induite par ladite déformation étant réalisé par observation de ladite dégradation.

La figure 4b représente un tel témoin 15 partiellement décollé de la portée périphérique 9a du collet 9 sous l'effet de la dilatation correspondant à un jeu fonctionnel seuil à obtenir dans le montage.

Pour ce faire, le matériau de la fixation et/ou du témoin 15 peut présenter un module de Young supérieur et/ou un allongement à la rupture inférieur à ceux du matériau de la portée 9a de l'ensemble. En particulier, le témoin 15 peut être collé sur la portée 9a au moyen d'un adhésif fusible mécaniquement, par exemple de type thermoplastique.

## Revendications

1. Procédé de montage d'un palier à roulement dans un mécanisme fonctionnel, ledit palier comprenant un ensemble intérieur et un ensemble extérieur formant entre eux un espace de roulement dans lequel est disposé un ensemble de roulement pour permettre la rotation relative desdits ensembles extérieur et intérieur, ledit procédé prévoyant une déformation du palier lors de son montage dans le mécanisme pour ajuster un jeu fonctionnel entre l'ensemble de roulement et les ensembles intérieur et extérieur, ledit procédé étant **caractérisé en ce qu'**il prévoit :
- d'équiper au moins un ensemble avec un dispositif (13, 14, 15) apte à changer d'état optique en fonction de la déformation du palier, ledit dispositif étant fixé audit ensemble ;
- de contrôler le jeu fonctionnel par observation de l'état optique dudit dispositif.

2. Procédé de montage selon la revendication 1, **caractérisé en ce que** l'ensemble intérieur comprend un organe (3) qui est dilaté lors du montage du palier dans le mécanisme, l'état optique d'un dispositif de contrôle (13, 14, 15) étant fonction de ladite dilatation.

3. Procédé de montage selon la revendication 2, **caractérisé en ce que** le dispositif de contrôle (13, 14, 15) est fixé à l'organe intérieur (3) ou à un composant de l'ensemble intérieur qui est solidaire en dilatation dudit organe.

4. Procédé de montage selon l'une des revendications 2 ou 3, **caractérisé en ce que** l'organe intérieur (3) présente un alésage (10) qui est emmanché sur un cône (11) du mécanisme fonctionnel pour, en fonction de la distance d'emmanchement, ajuster un jeu fonctionnel du fait de la dilatation dudit alésage par ledit cône, ledit procédé prévoyant d'ajuster la distance d'emmanchement jusqu'à contrôler un jeu fonctionnel souhaité.

5. Procédé de montage selon l'une quelconque des revendications 1 à 4, **caractérisé en ce qu'**un dispositif de contrôle comprend un témoin (15) qui est fixé sur une portée d'un ensemble, ladite fixation et/ou ledit témoin étant agencé pour se dégrader visuellement en fonction de la déformation de ladite portée, le contrôle de la préchage induite par ladite déformation étant réalisé par observation de ladite dégradation.

6. Procédé de montage selon la revendication 5, **caractérisé en ce que** le matériau de la fixation et/ou du témoin (15) présente un module de Young supérieur et/ou un allongement à la rupture inférieur à ceux du matériau de la portée de l'ensemble.

7. Procédé de montage selon l'une quelconque des revendications 1 à 6, **caractérisé en ce qu'**un dispositif de contrôle comprend un témoin (13) qui est fixé sur une portée d'un ensemble, ledit témoin étant réalisé à base d'un matériau qui est apte à changer de spectre optique en fonction de sa déformation.

8. Procédé de montage selon l'une quelconque des revendications 1 à 7, **caractérisé en ce qu'**un dispositif de contrôle comprend un motif géométrique (14) qui est réalisé sur une portée d'un ensemble, ledit motif étant agencé pour changer de géométrie en fonction de la déformation de ladite portée.

9. Procédé de montage selon la revendication 8, **caractérisé en ce que** le contrôle du jeu fonctionnel est réalisé par comparaison du motif géométrique (14) avec un étalon dudit motif.

10. Procédé de montage selon l'une quelconque des revendications 1 à 9, **caractérisé en ce qu'**il prévoit un contrôle itératif du jeu fonctionnel lors du montage du palier dans le mécanisme, la déformation du palier étant stoppée après contrôle d'un jeu fonctionnel seuil.

11. Procédé de montage selon l'une quelconque des revendications 1 à 10, **caractérisé en ce qu'**un dispositif de contrôle (13, 14, 15) est apte à changer d'état optique en fonction d'au moins une valeur seuil de déformation du palier.

12. Procédé de montage selon la revendication 11, **caractérisé en ce qu'**il prévoit plusieurs dispositifs de contrôle (13, 14, 15) qui sont aptes à changer d'état optique en fonction de respectivement une valeur seuil de déformation du palier, ledit procédé prévoyant de pouvoir contrôler le jeu fonctionnel induit par chacune desdites déformations seuils.

13. Procédé de montage selon l'une quelconque des revendications 1 à 12, **caractérisé en ce que** le contrôle du jeu fonctionnel est réalisé par observation visuelle et/ou par un système vidéo ou d'analyse spectrale de l'état optique du dispositif.

14. Procédé de montage selon l'une quelconque des revendications 1 à 13, **caractérisé en ce que** l'ensemble de roulement comprend deux rangées (4a, 4b) de rouleaux (4) qui sont retenues par respectivement une cage (5a, 5b) en étant espacées axialement dans l'espace de roulement, l'ensemble intérieur présentant deux pistes (3a, 3b) de roulement sur chacune desquelles une rangée (4a, 4b) de rouleaux (4) est disposée, l'ensemble extérieur présentant une piste (2a) de roulement sphérique dans laquelle les deux rangées (4a, 4b) de rouleaux (4) sont disposées afin de permettre un rotulage angulaire desdits ensembles.
